# EUROPEAN PATENT SPECIFICATION

(11) **EP 0 914 276 B1**
(45) Date of publication and mention of the grant of the patent: **08.10.2003**
(21) Application number: 97928138.3
(22) Date of filing: 03.07.1997
(51) Int. Cl.: B64D 15/12

(54) **A METHOD AND A SYSTEM FOR DEICING OF AIRFOIL WINGS OF COMPOSITE MATERIAL**
ENTEISUNGSVORRICHTUNG UND -VERFAHREN FÜR EINEN TRAGFLÜGEL AUS FASERVERBUNDSTOFF
PROCEDE ET DISPOSITIF SERVANT A DEGIVRER DES AILES EN MATERIAU COMPOSITE PRESENTANT UN PROFIL AERODYNAMIQUE

(30) Priority: 03.07.1996 DK 73396
(43) Date of publication of application: 12.05.1999
(73) Proprietor: LM GLASFIBER A/S, 6640 Lunderskov (DK)
(72) Inventor: GRABAU, Peter, DK-6000 Kolding (DK)
(74) Representative: Jensen, Peter Kim
(86) International application number: DK9700294
(87) International publication number: WO98001340

(56) References cited:
- GB-A- 2 292 422
- US-A- 3 549 964
- US-A- 4 060 212
- US-A- 5 061 836
- US-A- 5 074 497
- US-A- 5 615 849

## Description

The present invention relates to a system for deicing of windmill wings.

In connection with windmills at many places of the earth it is a well-known phenomenon that the windmill wings may get iced, whereby the effect of the windmill is drastically reduced because of the associated change of the airfoil profile. In particular where the conditions for icing are good, i.e. low temperatures and high air humidity or direct rainfall, the ice formation on the mill wings amounts to a big problem, and in some areas these conditions may be present in up to 100 days per year.

Analogous problems are known from the aviation. The icing occurs in particular when the wing is in motion, and mainly on the leading edge of the wing. This may be very critical, because the shape of the front edge of an airfoil wing greatly influences the aerodynamic characteristics of the wing. Thus, the efficiency of a windmill wing may decrease by 40-50% with an ice layer of only 2 cm. As a consequence of an ice coating on one or more wings of a windmill rotor, unbalance may occur in the rotor, in particular if ice falls off from a wing in operation. This may incur noticeable damage on the mill due to the unbalance, and ice pieces falling off may cause damage to nearby persons, animals or equipment. A stationary wing may get iced all over its surface, with the same probable consequences.

Therefore, many attempts have been made for solving or at least reducing the problems with respect to icing of windmill wings, squinting also to analogous problems and solutions in the field of aviation.

Thus, it has been attempted to effect deicing of windmill wings using a heating sheet on the front edge area. With this principle, which is also known from deicing systems of aircraft wings, the heating sheet is placed either at the outside of the wing or as a lamination layer in the wing shell material or at the interior side thereof. This kind of heating requires a lot of energy, because the wing is subject to excessive cooling; the tip of a windmill wing may well [metres] move with a speed of about 60 metres per second. The heating may be arranged in sections so that only parts of the wing are heated, in order to compensate for the high energy consumption. As an example it can be mentioned that the required energy for a sectionized heating of a 600 kW windmill is about 20 kW.

Also other principles have been tried, including inflatable rubber front edges and special surface treatments, but so far without particularly attractive results.

US 5,061,836 discloses a deicing system for an aircraft engine 4 with a non-rotating section and rotatable blades, the non-rotating section being provided with a microwave emitter for irradiating the blades which absorb most of the microwave energy.

From US-A-4, 060,212 it is known to effect a deicing of rotor blades of helicopters by means of microwaves, these from a centrally placed generator being transmitted to the surface of the rotating blades, where the waves are brought to propagate outwardly by internal reflections in the ice layer, which is thereby heated sufficiently to get released from the blade surface. This solution is unsuitable for large windmills or for large mill wings of composite material.

However, in connection with the invention it has been found that it is advantageous to use microwaves for the purpose anyway, though based on another operation principle and with another location of the wave generator, viz. primarily with co-rotating generators mounted directly in the wings, preferably in a stationary manner. It has been found that the relevant composite materials may in fact be heated by microwave energy, almost better than an ice layer, and on that background it is possible to aim for a more ideal solution than a deicing, viz. an anti-icing, by which the wing material during relevant, critical climatic conditions is heated for counteracting any initial ice formation. As the wing is made as a shell construction, there are good conditions for supplying the required energy from the inside.

It should be noted that the said critical conditions only occur by the presence of moisture or water and in a rather narrow temperature range just below the freezing point, where a sub cooling is possible, and for that reason it is only required to raise the surface temperature a few degrees whenever these conditions occur. It is then avoidable to use additional energy for producing the required melting heat in the ice, and also the hazards connected with the throwing off of loosened ice lumps will be avoided.

The present invention is directed to a system for deicing of windmill wings as defined in claim 1.

With the invention it has been found suitable to make use generally of microwave generators of the type developed for household microwave ovens. In general, these generators will be too small, but they are relatively inexpensive because of large production figures, and it is directly advantageous to use the required plurality of them in each wing, because this may contribute to a suitable distribution of the energy, when they are placed at different places, and then they can also be actuated selectively according to the requirements.

In connection with the invention it may be preferable that at least parts of the wing surface be coated with a material such as chicken wire, which will act reflecting on the microwaves and may be painted over to provide suitable smoothness of the wing surface. The microwaves exhibit a relatively good penetration in the composite material and may thus be reflected a rather high number of times through the wing shell between suitable reflector surfaces. This also implies that with a suitably adjusted angle of incidence of the waves it will often be possible to achieve a distribution of the wave energy from a generator mounted at the root of the wing all the way out to the tip of the wing.

The system should not necessarily be dimensioned so as to be effective even under the most extreme conditions, e.g. in connection with glazed frost, inasfar as it is still usable for a release thawing of a possible ice coating.

In the following the invention is described in more detail with reference to the drawing, in which:
Fig. 1 shows a windmill with an anti-icing system according to a first embodiment of the invention;
Fig. 2 shows a microwave generator equipped wing;
Figs. 3 and 4 show possible locations of the microwave generators relative to the wing;
Fig. 5 shows a location of generators at the root of the wing; and
Figs. 6 and 7 show two further embodiments of an anti-icing system according to the invention.

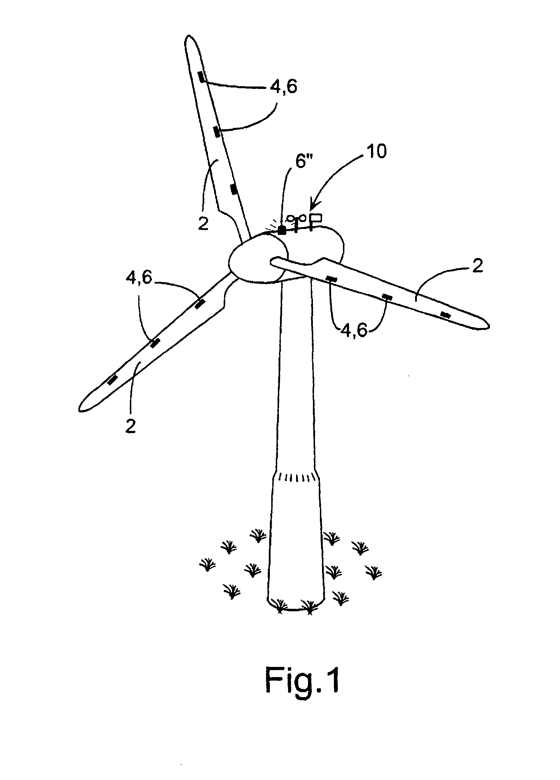

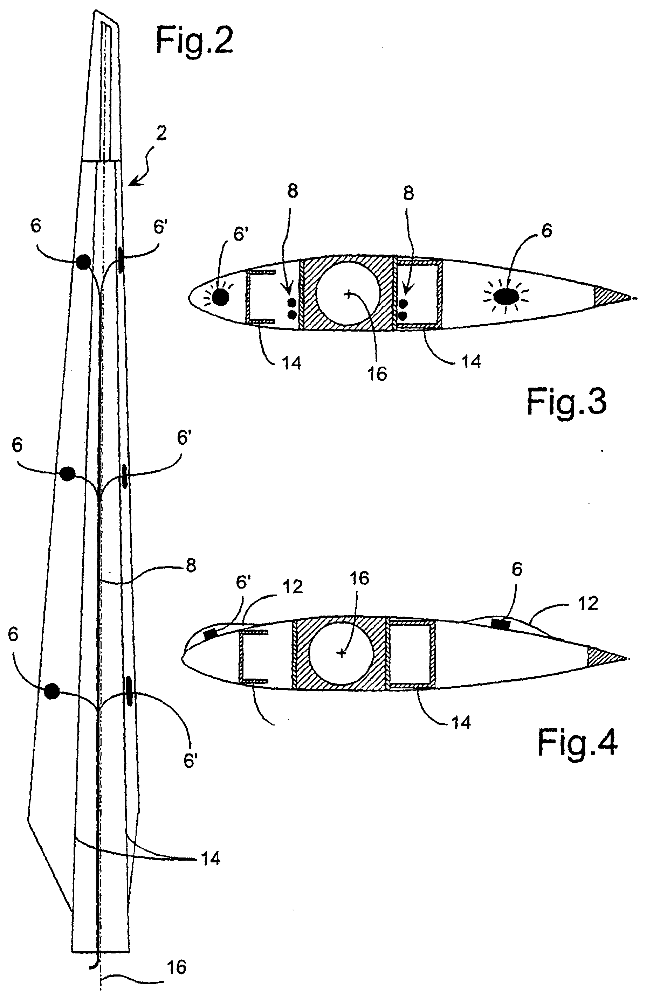

In Fig. 1 is shown a windmill in which a heating system based on microwaves is mounted. The microwave equipment comprises a number of microwave generators 6 mounted on or in the wings 2. In a preferred embodiment a number of such generators may be built into the wing as shown in Figs. 2 and 3. The generators 6' may advantageously by provided along the front edge of the wing 2 for a concentrated heating of the front edge area. The generators 6 may of course also be placed elsewhere on the wing 2, as exemplified in Figs. 2, 3 and 4.

The wing may be heated in sections when more microwave generators are mounted in the wing. Optionally, the system may be so adapted that each section comprises one or more generators 6 which, via a control system, cooperate with non-illustrated moisture and temperature detectors also mounted in the wing, such that only such sections are heated at which an icing may occur. Hereby a differentiated, requirement-controlled heating of the wing surface parts is obtainable, with a minimum consumption of energy.

The microwave generators 6,6' are connected via coaxial cables 8 and a non-illustrated arrangement for transfer of effect to the generators from a central energy source. The relevant arrangement for energy transfer can be a number of sliding shoes at the main shaft of the mill, connected to the generators via the cables and cooperating with one or more contact rings provided in the hub of the mill. The cables 8 should preferably be arranged close to the neutral axis 16 of the wing, as a safety measure against fatigue fractures in the cables 8 resulting from deflections of the wing 2. Optionally, the cables may be mounted inside the longitudinal main beams 14 of the wing 2.

In a wing as shown in cross section in Fig. 3 the microwave generators are built-in in the wing. Alternatively, in Fig. 4 the generators 6 are mounted at the outside of ths wing, with suitable aerodynamical shieldings 12, such that the air resistance of the wing will not be too high and the efficiency thus too low.

In connection with the heating of the wings 2 the equipment 4 may also comprise a microwave generator 6" for heating of measuring equipment 10 of the mill, see Fig. 1.

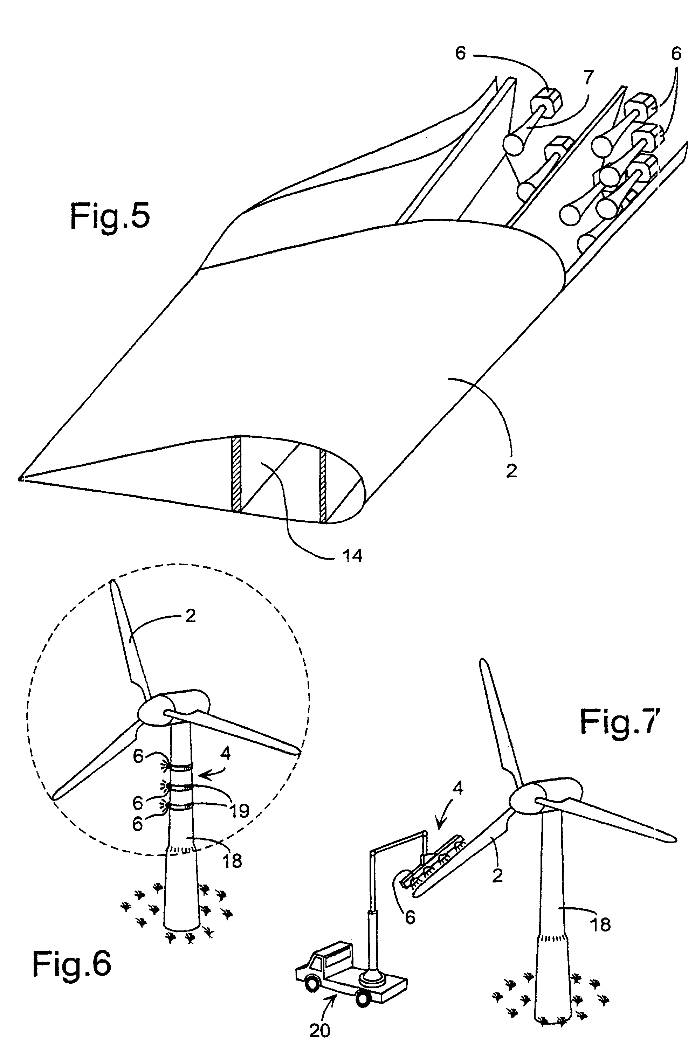

In Fig. 5, the innermost part of a mill wing 2 is shown, partly in fraction. As seen, there is at the wing root mounted a number of microwave generators 6, each with their discharge horn 7 directed outwardly in the wing. By the mounting it may be required to carry out an accurate adjustment of the horn directions for a good exploitation of the energy from the generators in view of the reflection conditions in the wing. However, it is also possible to make use of real wave conductors for distribution of energy to the outer end portion of the wing.

Another type of embodiment of the invention is shown in Fig. 6, where the microwave equipment 4 is stationary, though rotatably mounted on the mill tower 18. By way of example, the generators 6 may be mounted in connection with ring units 19 arranged around the tower, such that the generators may be annularly displaced in order to steadily be oriented towards the rotor.

In normal operation, the wings rotate past the microwave equipment 4 on the tower 18, whereby the wings 2 can be heated. The wings may be sectioned next to the respective microwave generators 6 on the tower 18. In that connection it would also be possible to mount the generators 6 in such a manner that they are vertically displaceable on the tower or, respectively, placed on projecting stalks on the rings so that the wings can sweep across them in close proximity thereof. Hereby it is possible to achieve a uniform heating of all the wings of the rotor. In minimizing the distance between the microwave generators 6 and the wings 2 the microwave energy may heat the wings with an acceptable low energy consumption.

According to a third embodiment of the invention the microwave equipment may be suspended in a crane or the like. In connection with erection and washing of windmills it is known to make use of a mobile equipment in the form of cranes mounted on trucks or the like. This embodiment of a heating system according to the invention is particularly well suited for wings which are already totally ice coated, inasfar as it may be impossible to restart the mill as long as the wings are heavily ice coated.

It is to be mentioned that the cable 8 shown in Fig. 2 may form part of a lightning conductor system.

## Claims

1. A windmill with wings (2) of a composite material,
**characterized in that** the wingsave it is provided with co-rotating, built-in microwave generators (6,6') for a light heating of the composite material itself by means of microwave energy.

2. A mill according to claim 1, **characterized in that** it is equipped for selective actuation of generators (6,6') placed at different locations.

3. A mill according to claim 1,
**characterized in that** each wing (2) is equipped with a number of interior microwave generator (6,6'), and that the wing surface and optionally also some internal surface portions in the wing (2) are at least partly covered by a microwave reflecting material.

4. A mill according to claim 1,
**characterized in that** it is equipped with a plurality of microwave generator (6,6') of the type used for household microwave ovens.

## Patentansprüche

1. Windrad mit Flügeln (2) aus einem Verbundwerkstoff, **dadurch gekennzeichnet, dass** die Flügel mitrotierende, eingebaute Mikrowellengeneratoren (6, 6') aufweisen, die den Verbundwerkstoff mittels Mikrowellenenergie etwas aufwärmen.

2. Windrad gemäß Anspruch 1, **dadurch gekennzeichnet, dass** es ausgestattet ist für wahlweises Betätigen der Generatoren (6, 6'), die an verschiedenen Orten angeordnet sind.

3. Windrad gemäß Anspruch 1, **dadurch gekennzeichnet, dass** jeder Flügel (2) eine Anzahl von inneren Mikrowellengeneratoren (6, 6') aufweist und dass die Flügeloberfläche und optional auch einige innere Oberflächenabschnitte in dem Flügel (2) zumindest teilweise mit mikrowellenreflektierendem Material bedeckt sind.

4. Windrad gemäß Anspruch 1, **dadurch gekennzeichnet, dass** es ausgestattet ist mit einer Mehrzahl von Mikrowellengeneratoren (6, 6'), die von der Art sind, die für Haushaltsmikrowellengeräte benutzt werden.

## Revendications

1. Eolienne dont les ailes (2) sont faites d'un matériau composite, **caractérisée en ce que** les ailes sont dotées de générateurs d'ondes ultracourtes incorporés tournant en même temps qu'elles (6, 6') destinés à effectuer un léger échauffement du matériau composite lui-même par l'intermédiaire de l'énergie des ondes ultracourtes. .

2. Eolienne selon la revendication 1, **caractérisée en ce qu'**elle est équipée pour permettre un actionnement sélectif de générateurs (6, 6') placés en différents endroits.

3. Eolienne selon la revendication 1, **caractérisée en ce que** chaque aile (2) est équipée d'un certain nombre de générateurs d'ondes ultracourtes intérieurs (6, 6') et **en ce que** la surface de l'aile et, facultativement, aussi certaines parties de surface internes de l'aile (2) sont au moins partiellement recouvertes d'un matériau réfléchissant les ondes ultracourtes.

4. Eolienne selon la revendication 1, **caractérisée en ce qu'**elle est équipée de plusieurs générateurs d'ondes ultracourtes (6, 6') du type utilisé pour les fours domestiques dits à micro-ondes.
